# EUROPÄISCHE PATENTSCHRIFT

(11) **EP 3 746 278 B1**
(45) Veröffentlichungstag und Bekanntmachung des Hinweises auf die Patenterteilung: **20.04.2022**
(21) Anmeldenummer: 18815130.2
(22) Anmeldetag: 29.11.2018
(51) Int. Cl.: B29B 7/18, B29B 7/26

(54) **INNENMISCHER**
INTERNAL MIXER
MÉLANGEUR INTERNE

(30) Priorität: 31.01.2018 DE 102018201482
(43) Veröffentlichungstag der Anmeldung: 09.12.2020
(73) Patentinhaber: Harburg-Freudenberger Maschinenbau GmbH, 21079 Hamburg (DE)
(72) Erfinder: ALFES, Steffen, 57258 Freudenberg (DE); NOELLING, Petra, 57572 Niederfischbach (DE); RINKER, Maik, 51645 Gummersbach (DE); KEUTER, Harald, 57258 Freudenberg (DE); HESSE, Markus, 57258 Freudenberg (DE); LIMPER, Andreas, 57258 Freudenberg (DE)
(74) Vertreter: Grosse, Wolf-Dietrich Rüdiger
(86) Internationale Anmeldenummer: PCT/EP2018/082918
(87) Internationale Veröffentlichungsnummer: WO 2019/149404

(56) Entgegenhaltungen:
- DE-A1- 2 059 844
- DE-B1- 1 679 879
- DE-C2- 2 836 940
- GB-A- 2 173 414
- SU-A1- 1 692 849
- US-A- 1 200 070
- US-A- 1 936 248
- US-A- 2 299 502
- US-A- 2 559 418

## Beschreibung

Die Erfindung betrifft einen Innenmischer mit einer von einem Gehäuse umschlossenen Mischkammer, mit einem Beschickungsschacht, in dem ein Stempel geführt ist, mit einer verschließbaren Entleerungsklappe sowie mit einem ineinandergreifenden Rotorsystem, bestehend aus einem Paar jeweils um eine Rotorlängsachse drehbaren Rotoren, wobei jeder Rotor einen Rotorhauptkörper aufweist, auf dem mindestens je ein Rotorflügel angeordnet ist, und die Rotorflügel der beiden Rotoren ineinandergreifen.

Es sind Mischer mit Rotoren bekannt deren Rotorflügel lediglich tangieren, und bei denen bedingt durch den großen Spalt zwischen den Rotoren das über den Beschickungsschacht zugeführte Material sehr schnell und komplett in die Mischkammer eingezogen werden kann. Durch das schnelle Einziehen des Materials gewährleisten die Mischer mit tangierenden Rotoren zwar einen großen Durchsatz, dadurch, dass die Mischwirkung jedoch nur zwischen den Rotorflügel-Spitzen beider Rotoren und der Innenwandung der Mischkammer erzeugt wird, ist sowohl die Dispersion (Zerteilen der eingebrachten Feststoffe) sowie die Distribution (Verteilen der Stoffe im makroskopischen Maßstab) schlecht.

Schon die US 1 200 070, aber auch die DE 20 59 844 A1 offenbaren einen derartigen unter der Bezeichnung Banbury-Mischer bekannt gewordenen Mischer mit tangierenden Rotoren.

Dagegen ergibt sich bei einem gattungsgemäßen Innenmischer mit ineinandergreifenden Rotorflügeln sowohl zwischen der Mischkammer und den Rotorflügel-Spitzen als auch zwischen den Rotoflügelflanken beim Aufeinanderzubeweben der Rotorflügel der beiden Rotoren, sowie zwischen den Rotorhauptkörpern und den Rotorflügelspitzen beim Eingreifen beider Rotoren selbst eine Mischwirkung, wodurch sowohl Dispersion als auch Distribution der zugeführten Materialien sehr gut sind. Auch hier erfolgt der Einzug der Beschickungsmaterialien über den Spalt zwischen den Rotoren. Nachteilig ist jedoch, dass der sich ergebende Spalt der sich zwischen den Spitzen der Rotorflügel eines Rotors und dem kreiszylindrischen Rotorhauptkörper des zweiten Rotors, über welchem sich die Spitzen des ersten Rotors abwälzen nur sehr klein ist. Dadurch geht der Einzug der über den Beschickungsschacht eingebrachten Materialien nur sehr langsam vonstatten, wodurch einerseits der Gesamtdurchsatz von Innenmischern mit ineinandergreifenden Rotorflügeln geringer ist als bei Innenmischern mit tangierenden Rotorflügeln und wobei sich ebenfalls als nachteilig herausstellt, dass sich das Dispersionsverhalten während des Einbringen des Materials verschlechtert. Das anfangs sehr gute Dispersionsverhalten wird durch die bereits in der Mischkammer gemischten Materialien, deren Viskosität durch das Mischen und die dadurch steigenden Temperaturen sinkt, schlechter. Das heißt, dass die am Ende des Füllvorgangs in die Mischkammer eingebrachten Materialien bereits auf niedrig viskosere Mischungen in der Mischkammer treffen als die anfangs eingebrachten Materialien, so dass ein Zerteilen der restlich eingebrachten Materialen schwieriger und aufwändiger wird.

Neben vielen z.B. aus den DE 697 30 480 T2 oder DE 689 03 047 T2 bekannten Konturen von Rotoren für tangierende Mischer, bei denen nicht auf die Kontur der jeweils benachbarten Rotoren geachtet werden muss, wird bei Innenmischern mit ineinandergreifenden Rotorflügeln der Stand der Technik durch Rotoren mit kreisrunden zylindrischen Rotorhauptkörpern gebildet, auf denen Rotorflügel, wie z. B. aus der DE 28 36 940 C2 oder aber der EP 2 409 822 B2 bekannt, angeordnet sind.

Die US 2 559 418 A offenbart einen Trog-Mischer mit ineinandergreifenden Rotorflügeln, wobei jeder Rotorhauptkörper gänzlich, das heißt vollumfänglich und über seine gesamte axiale Länge mit Rotorflügeln belegt ist, so dass die Flügelspitzen des einen Rotors lediglich mit Flügelbereichen des zweiten Rotors, und nicht mit dem Rotorhauptkörper interagieren. Das Zusammenwirken der Rotorflügel und die entstehenden offenen Bereiche bewirken eine Förderung der zu mischenden Materialien in axialer Richtung, und eine Übergabe der zu mischenden Materialien zum zweiten Rotor. Bei dem Trog- Mischer ergeben sich keine Probleme bezüglich des Einzugsverhaltens, da die zu mischenden Materialien, nicht wie bei einem geschlossenen Innenmischer vom Stempel zwischen die Rotoren gepresst werden, sondern im offenen Trog so lange auf den Rotoren schwimmen, bis sie zwischen den Rotoren von diesen eingezogen werden. Dadurch ergeben sich erheblich längere Mischzeiten als bei geschlossenen Innenmischern.

Der Erfindung liegt die Aufgabe zugrunde, gattungsgemäße Innenmischer mit Rotoren, die ineinandergreifende Rotorflügel aufweisen so weiterzubilden, dass ein verbessertes, d. h. schnelleres Einzugsverhalten unter gleichzeitiger Optimierung der Dispersion sowie der Distribution der eingebrachten Materialien erreicht wird.

Diese Aufgabe wird durch einen Innenmischer wie im unabhängigen Anspruch 1 beansprucht gelöst; weitere bevorzugte Ausführungen werden in den abhängigen Ansprüchen beansprucht.

Zur Lösung dieser Aufgabe wird demnach vorgeschlagen, dass bei mindestens einem der Rotoren in den Oberflächenabschnitten, in denen auf seinem Rotorhauptkörper keine Rotorflügel angeordnet sind, und die im Interaktionsbereich zu den Rotorflügel-Spitzen des zweiten Rotors liegen, der Rotorhauptkörper zumindest in Teilbereichen nicht zylindrisch und in seinem Querschnitt unrund ausgebildet ist, wobei nicht zylindrisch und unrund eine beliebige Hüllkurve der Rotationshauptkörper in den Interaktions-Oberflächenabschnitten bedeuten, in denen gezielt an bestimmten Stellen Vertiefungen in der Oberfläche der Rotorhauptkörper eingebracht oder Erhöhungen auf die Oberfläche der Rotorhauptkörper aufgebracht sind.

Dadurch wird erreicht, dass die Höhe des Spaltes für den Mischungsdurchgang beim Einziehen der Materialien aus dem Beschickungsschacht in einem der Interaktionsbereiche, nämlich zwischen den Rotoren, d.h. zwischen Rotorflügel-Spitze des einen Rotors und dem Rotorhauptkörper des zweiten Rotors zumindest in Teilbereichen beeinflusst werden kann. Dabei kann die Oberfläche des zweiten Rotorhauptkörpers z.B. bereichsweise zurücktreten, wodurch in diesem Bereich größere offene Spalte für das durch den Beschickungsschacht eingebrachte Material erreicht und damit ein schnellerer Einzug des Materials gewährleistet wird. Eine gute Dispersion wird durch die Bereiche zwischen Rotorflügel-Spitze des einen Rotors und dem Rotorhauptkörper des zweiten Rotors erreicht, in denen die Oberfläche des zweiten Rotorhauptkörpers z.B. nicht zurücktritt, sondern sogar hervortritt.

Durch die Bereiche eines sich vergrößernden Spaltes zwischen Rotorflügel-Spitze des einen Rotors und dem Rotorhauptkörper des zweiten Rotors wird während des Mischvorgangs ein Fluss des Materials hin zu diesem nicht zylindrisch und in seinem Querschnitt unrund ausgebildeten Teilbereich des Rotors erreicht, wodurch die Distribution bei den ineinandergreifenden Rotorflügeln nochmals verbessert wird.

Ein nicht zylindrischer Teilbereich des Rotorhauptkörpers könnte z. B. kegelförmig verjüngt ausgestaltet sein. Bei einem zwar zylindrisch aber in seinem Querschnitt unrunden Teilbereich des Rotorhauptkörpers könnten die Vertiefungen im Rotorhauptkörper immer wiederkehrend ausgebildet sein. Nicht zylindrisch und unrund kann dann eine beliebige Hüllkurve des Rotorhauptkörpers in den Interaktions-Oberflächenabschnitten, in denen auf dem Rotorhauptkörper keine Rotorflügel angeordnet sind ergeben, bei denen gezielt an bestimmten Stellen Vertiefungen oder Erhöhungen in der Oberfläche der Rotorhauptkörper eingebracht bzw. auf die Oberfläche der Rotorhauptkörper aufgebracht sind. Dabei kann nicht nur der zweite Rotorhauptkörper, sondern es können beide Rotorhauptkörper zumindest in Teilbereichen nicht zylindrisch und in ihrem Querschnitt im Interaktionsbereich unrund ausgebildet sein.

Vorteilhaft wird dazu vorgeschlagen, dass in den oben erwähnten Teilbereichen des Rotorhauptkörpers der Abstand der Rotorhauptkörper-Oberfläche zu seiner Rotorlängsachse zwischen mindestens zwei in ihrer axialen Position vorgebbaren senkrecht zur Rotorlängsachse gelegenen Ebenen zumindest über ein Rotorhauptkörper-Umfangssegment verschieden ist.

Damit kann z. B. an einer vorher festgelegten Stelle auf einem der Rotorhauptkörper an der keine Rotorflügel angeordnet sind eine Vertiefung vorgesehen sein. An dieser Stelle vergrößert sich damit der Spalt gegenüber den Rotorflügel-Spitzen des zweiten Rotors, wobei der vergrößerte Spalt zur Verbesserung des Materialeinzugs beiträgt.

Von Vorteil ist, dass der unterschiedliche Abstand in radialer und/oder axialer Richtung vorgesehen sein kann. Damit wird erreicht, dass die Größe des oben beschriebenen Spaltes und/oder seine axiale Lage beeinflussbar sind.

Ändern sich die Abstände stetig, ergeben sich keine Kanten, die sich im Betrieb stärker abnutzen könnten, und an denen Mischungen kleben könnten. Dadurch kann sich der Spalt z.B. über die Länge des Wälzbereiches bzw. Interaktionsbereiches stetig zunehmend oder abnehmend oder aber sich progressiv bzw. degressiv einer Funktion folgend ändern.

Wenn sich der Spalt zwischen einem der Rotorhauptkörper und den Spitzen der Rotorflügel des zweiten Rotorhauptkörpers in Richtung der Rotorlängsachsen zu den Rotorenden hin verringert oder vergrößert, wird bei einer Verringerung erreicht, dass in der Mitte der Rotoren ein größerer, oben beschriebener Spalt entsteht wodurch ein sehr guter Einzug gewährleistet wird, während an den Enden der Rotoren sehr gute Dispersionsarbeit geleistet werden kann. Durch den sich nah in der Mitte der Rotoren vergrößernden Spalte wird zudem ein verstärkter Fluss des Materials von den Endbereichen der Rotoren hin zur Mitte erreicht, wodurch die Distribution der Materialien vergrößert wird. Als weiterer Vorteil ergibt sich, dass die Staubabdichtung, welche zwischen der stirnseitigen Mischkammerinnenwand und der jeweiligen Stirnseite der Rotoren wirkt, entlastet wird. Ein sich z.B. zu einem der Rotorenden hin zunächst vergrößernder und anschließend verringernder Spalt bewirkt zumindest einen außermittigen größeren Spalt und damit einen schnelleren Einzug der Materialien aus dem Beschickungsschacht. Erfindungsgemäß kann sich der oben erwähnte Teilbereich über den gesamten Interaktionsbereich des Rotorhauptkörpers auf dem keine Rotorflügel angeordnet sind erstrecken, wodurch insgesamt verbessernd auf Einzug, Dispersion und Distribution der Materialien hingewirkt werden kann.

Neben einflügeligen oder anderen mehrflügeligen Rotoren hat sich bewährt, dass der mindestens eine Rotor einen mittig angeordneten, sich über mindestens die Hälfte der Rotorlänge erstreckenden schraubenlinienförmig auf dem Rotorhauptkörper angeordneten langen Rotorflügel sowie in den jeweiligen Endbereichen des Rotors ebenfalls schraubenlinienförmig ausgebildete kürzere Rotorflügel aufweist, dass die Steigung eines der Rotorflügel gegenüber der Steigung der beiden anderen Rotorflügel gegensinnig ist, und dass zwischen den freien Enden der Rotorflügel Durchlässe für zu mischendes Material vorgesehen sind.

Damit können an jeder Stelle der Interaktions-Teilbereiche des Rotorhauptkörpers, über der sich eine Rotorflügel-Spitze abwälzt, Erhöhungen bzw. Vertiefungen angebracht werden.

Die Erfindung wird anhand der beiliegenden Zeichnungen näher erläutert. Dabei zeigen:
- Figur 1: die Prinzipdarstellung eines erfindungsgemäßen Innenmischers,
- Figur 2: eine schematische Seitenansicht eines Rotors mit Rotorflügel,
- Figur 3: einen Schnitt durch einen Rotorhauptkörper ohne Rotorflügel,
- Figur 4: zwei erfindungsgemäße Rotoren,
- Figur 5: einen Ausschnitt zwischen den beiden erfindungsgemäßen Rotoren,
- Figur 6a: zwei perspektivisch dargestellte erfindungsgemäße Rotoren,
- Figur 6b: einen Ausschnitt aus Figur 6a,
- Figur 7: vier Momentdarstellungen zweier Rotoren während einer ca. 30° Drehung, aus Figur 6a in Richtung der Pfeile D-D betrachtet,
- Figur 8: die Abwicklung eines Rotorhauptkörpers eines ersten Rotors mit den Abwälzbereichen der Rotorflügel-Spitzen eines zweiten Rotors, und
- Figur 9: vier Beispiele für eine Variation der Spaltkontur.

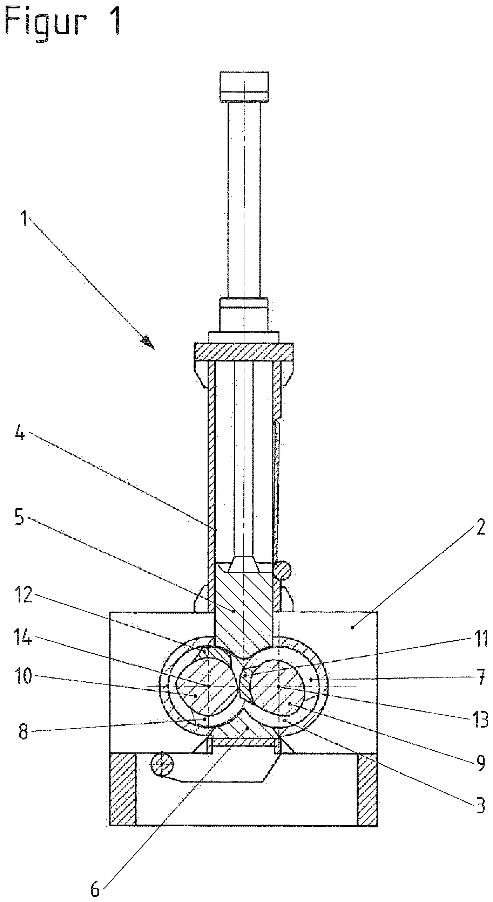

Figur 1 zeigt einen erfindungsgemäßen Innenmischer 1, bestehend aus einem Gehäuse 2, das eine Mischkammer 3 umschließt sowie einem Beschickungsschacht 4 mit einem Stempel 5, über den die Mischkammer 3 nach oben hin verschließbar ist. Weiterhin ist eine verschließbare Entleerungsklappe 6 zu erkennen, welche die Mischkammer 3 nach unten abzuschließen vermag, wobei bei geöffneter Entleerungsklappe 6 das fertige Mischerzeugnis aus der Mischkammer 3 ausgeworfen werden kann.

Weiterhin sind zwei Rotoren 7 und 8 mit ihren Rotorhauptkörpern 9 und 10 und den Rotorflügeln 11 und 12 zu erkennen. Die Rotorlängsachsen 13 und 14 der Rotoren 7 und 8 liegen so nah aneinander, dass die Rotoren 7 und 8 mit ihren Flügeln 11 und 12 ineinandergreifen.

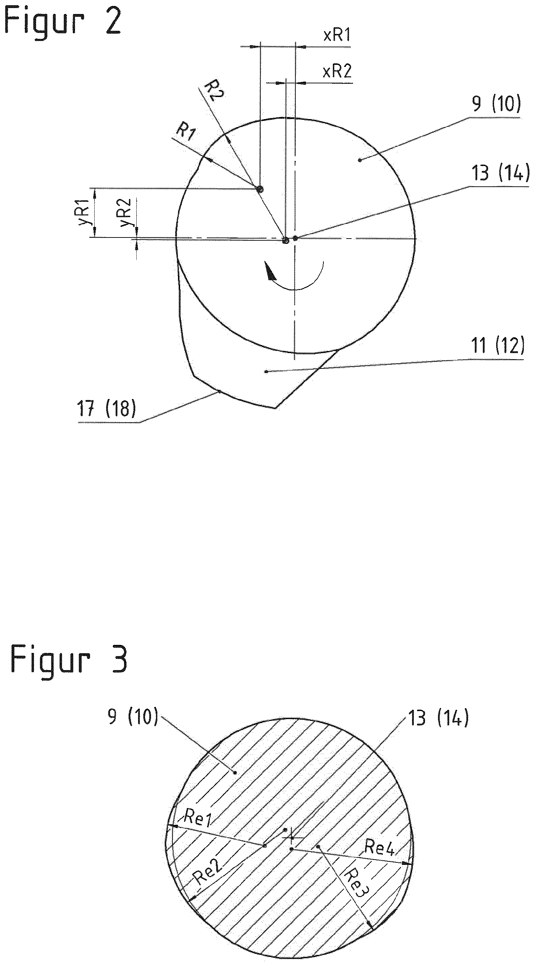

Figur 2 zeigt einen Rotor 7, (8) mit dem Rotorhauptkörper 9, (10) sowie den Rotorflügeln 11, (12), die in den Rotorflügel-Spitzen 17, (18) enden. Die Rotorlängsachse 13, (14) ist ebenfalls angedeutet. Durch die Andeutung zweier Radien R1 und R2, deren Mittelpunkte von der Rotorlängsachse 13, (14) um die Beträge YR1-XR1 sowie YR2-XR2 versetzt angeordnet sind, ist zu erkennen, dass der Rotor 7, (8) nicht wie bei den bis dato bekannten Rotoren einen kreiszylindrischen Hauptkörper aufweist, sondern dass der Rotorhauptkörper 9, (10) eine beliebige Hüllkurve aufweisen kann, wobei zur Verbesserung des Einzugsverhaltens an den Stellen, an denen keine Rotorflügel 11, (12) vorgesehen sind, der Radius z. B. kleiner ist als in den übrigen Bereichen des Rotorhauptkörpers 9 (10).

Figur 3 zeigt als weiteres Beispiel den Querschnitt durch einen Rotorhauptkörper 9, (10), wobei die Rotorlängsachse 13, (14) und davon abweichende Mittelpunkte für unterschiedliche Radien Re1 bis Re4 zu erkennen sind. Hier sind im Endbereich der Rotorhauptkörper 9, (10) Erhebungen auf den Rotorhauptkörper 9, (10) aufgebracht worden, durch welche dieser seine kreisrund angedeutete Form verliert und wodurch im Randbereich die Spalte zwischen Rotorhauptkörper 9, (10) des ersten Rotors 7, (8) und Rotorflügel-Spitzen des zweiten Rotoren 8, (7) noch enger werden, so dass in diesem Bereich besonders gute Dispersionsarbeit geleistet werden kann.

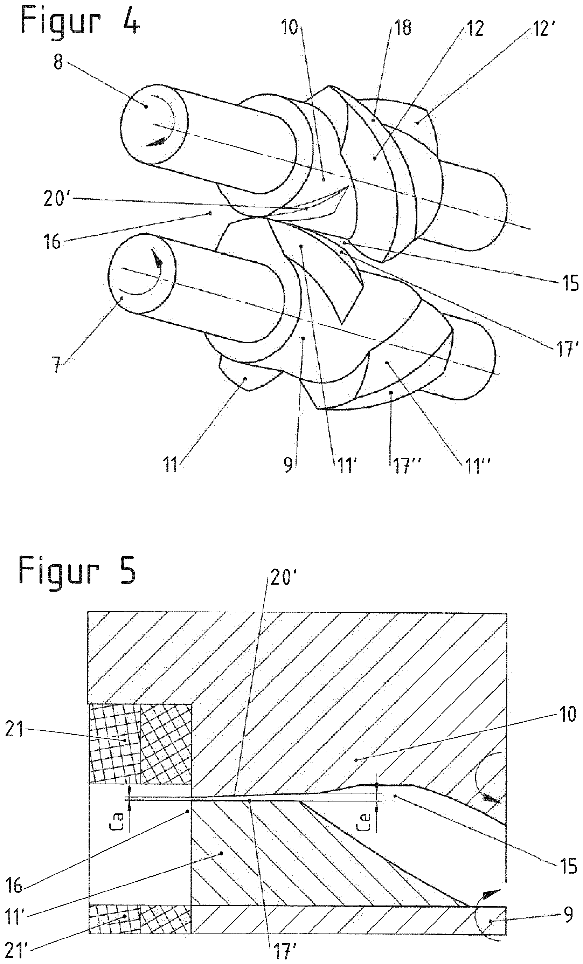

Figur 4 zeigt perspektivisch dargestellt die Rotoren 7 und 8 mit ihren Rotorhauptkörpern 9 und 10 sowie Rotorflügeln 11, 11', 11" und 12, 12', 12". Hier ist zu erkennen, dass der Spalt zwischen dem Rotorhauptkörper 10 und der Rotorflügel-Spitze 17" in axialer Richtung und in Rotationsrichtung in einem Mittenbereich 15 größer ist als im Randbereich 16. Durch den vom Randbereich 16 zum Mittelbereich 15 größer werdenden Spalt wird erreicht, dass das zu mischende Material, welches nachdem es aus dem Beschickungsschacht 4 eingezogen wurde und in der Mischkammer 3 verteilt worden ist, in Richtung auf den Mittelbereich 15 fließen kann, wo mehr Platz für das Material ist. Dadurch verbessert sich die Distribution des Materials. Im Randbereich 16 wird dagegen im kleinen Spalt besonders gute Dispersionsarbeit geleistet.

Damit wird nicht nur der Einzug verbessert, sondern auch die Dispersion und Distribution der Materialien optimiert.

Figur 5 zeigt einen Ausschnitt aus Figur 4. Hier sind die Rotationshauptkörper 9 und 10 zu erkennen. Gleichzeitig ist zu erkennen, dass im Randbereich 16 der Spalt erheblich kleiner ist als zur Rotormitte 15 hin. Weiterhin ist eine der Staubdichtungen 21 am Ende des Rotors dargestellt.

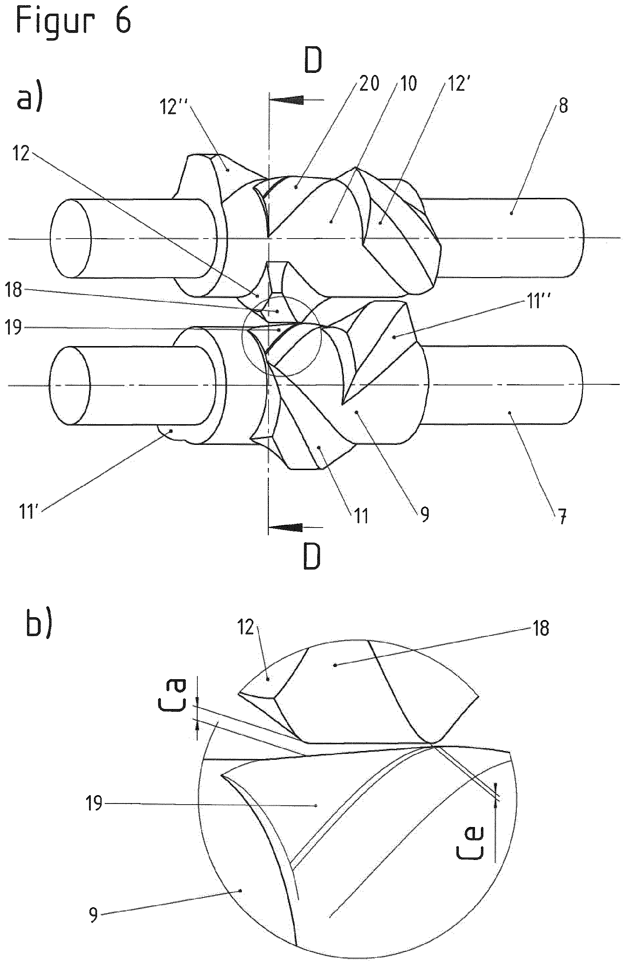

Figur 6a zeigt ähnlich wie Figur 4 eine perspektivische Darstellung zweier Rotoren 7, 8 eines Rotorpaares. Sowohl auf dem Rotorhauptkörper 9 des Rotors 7 als auch auf dem Rotorhauptkörper 10 des Rotors 8 sind neben Rotorflügeln 11, 11', 11"; 12, 12', 12" erfindungsgemäße Erhöhungen 19, 20, in deren Bereich die Rotorhauptkörper 9, 10 nicht zylindrisch und in ihrem Querschnitt unrund ausgebildet sind, dargestellt.

Die Figur 6b zeigt in einem Ausschnitt den Bereich des Auftreffens des Rotorflügels 12 auf die Erhöhung 19, wobei zu erkennen ist, dass sich der radiale Abstand der Rotorflügel-Spitze 18 zu der Erhöhung 19 in Drehrichtung der Rotoren verringert.

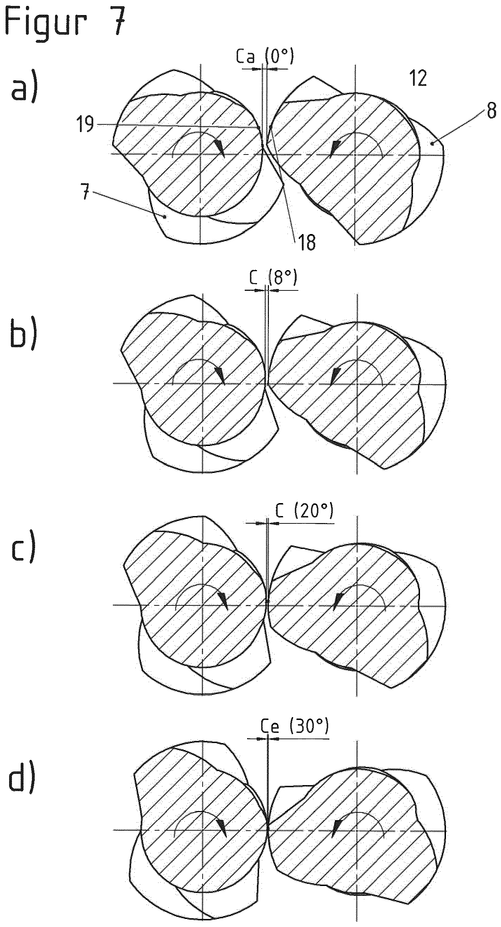

Figur 7 zeigt vier Momentdarstellungen zweier erfindungsgemäßer Rotoren während einer ca. 30°-Drehung der Rotoren. Dabei sind die Änderungen des Spalts während eines Quasi-Abrollvorgangs zwischen der Flügelspitze 18 des Rotors 8 zum Rotorhauptkörper 9 des Rotors 7 zu erkennen. Figur 7a zeigt einen großen Spalt Ca am Anfang bei 0º. Der Spalt C nach 8º ist gemäß Figur 7b bereits kleiner, und verringert sich über Figur 7c bei 20º bis der Spalt am Ende Ce bei 30º gemäß Figur 7d kaum noch erkennbar ist.

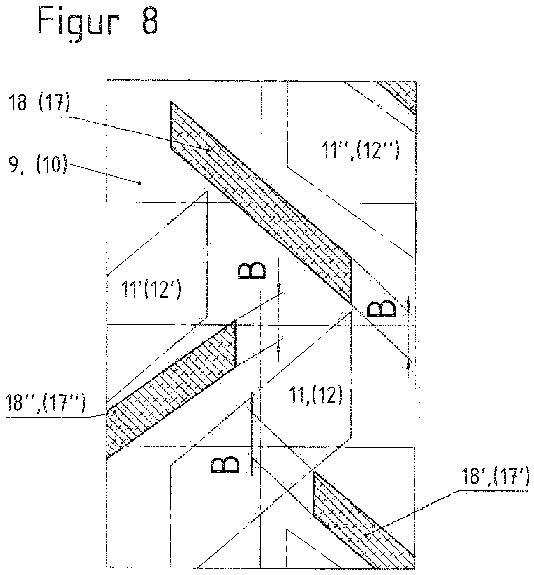

Figur 8 zeigt beispielhaft die Abwicklung eines Rotors 7, (8), wobei auf dem Rotorhauptkörper 9, (10) Rotorflügel 11, (12); 11', (12'); 11", (12") zu erkennen sind. Schraffiert dargestellt ist der Interaktionsbereich der Rotorflügel-Spitzen 18, (17); 18', (17'); 18", (17"), die sich innerhalb einer Umdrehung zwischen den Rotorflügeln 11, (12); 11', (12'); 11", (12") auf dem Rotorhauptkörper 9 (10) abwälzen. Die dabei dargestellte Länge B entspricht dem Bogenmaß der Rotorflügel-Spitzen 18, (17); 18', (17'); 18", (17").

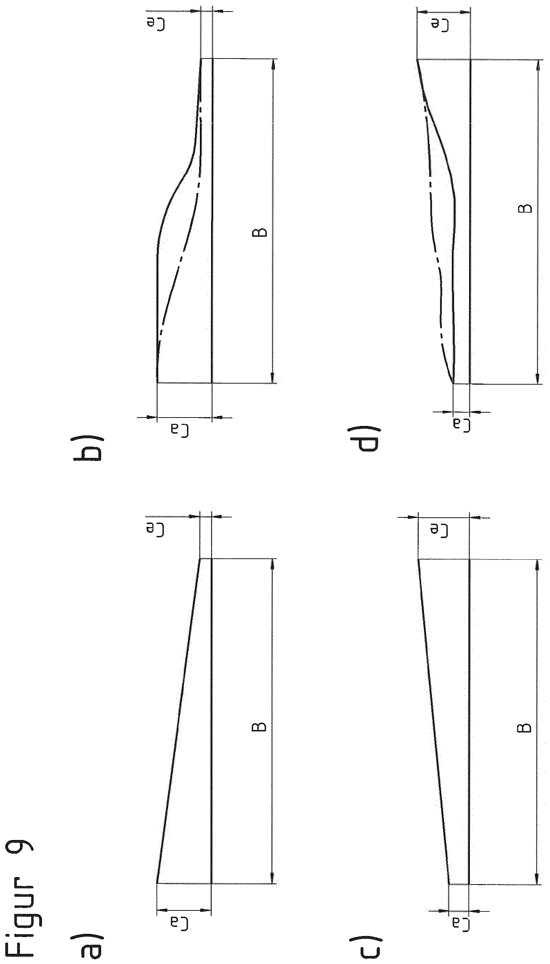

Figur 9 zeigt vier Beispiele, wie sich die Spaltkontur ändert bei unterschiedlicher Veränderung der sich erfindungsgemäß ergebenden Ausnehmungen/Erhebungen.

Figur 9a zeigt die Spaltkontur bei sich linear reduzierender Ausnehmung. Dabei stellt Ca die Spaltbreite am Beginn der Interaktion zwischen Rotorflügel-Spitze des einen Rotors und Rotorhauptkörper des anderen Rotors dar. Ce stellt die Spaltbreite am Ende der Interaktion dar, während B das Bogenmaß der Flügelspitze, welche der Interaktionslänge rechtwinklig zur Rotorlängsachse entspricht, zeigt.

In Figur 9b ändert sich die Tiefe der Ausnehmung nichtlinear. Angedeutet sind zwei unterschiedliche Beispiele für diese Nichtlinearität.

In Figur 9c steigt die Ausnehmung wieder linear an bzw. ist eine lineare Erhöhung am Rotorhauptkörper dargestellt.

Figur 9d dagegen zeigt zwei Beispiele für nichtlineare Erhöhung des Rotorhauptkörpers.

### Bezugszeichenübersicht

- 1: Innenmischer
- 2: Gehäuse
- 3: Mischkammer
- 4: Beschickungsschacht
- 5: Stempel
- 6: Entleerungsklappe
- 7: Rotor
- 8: Rotor
- 9: Rotorhauptkörper
- 10: Rotorhauptkörper
- 11: Rotorflügel
- 12: Rotorflügel
- 13: Rotorlängsachse
- 14: Rotorlängsachse
- 15: Mittelbereich
- 16: Randbereich
- 17: Rotorflügel-Spitze
- 18: Rotorflügel-Spitze
- 19: Erhöhung
- 20: Erhöhung
- 21: Staubabdichtung

## Patentansprüche

1. Innenmischer (1) mit einer von einem Gehäuse (2) umschlossenen Mischkammer (3), mit einem Beschickungsschacht (4) in dem ein Stempel (5) geführt ist, mit einer verschließbaren Entleerungsklappe (6) sowie mit einem ineinandergreifenden Rotorsystem bestehend aus einem Paar jeweils um eine Rotorlängsachse (13; 14) drehbaren Rotoren (7; 8), wobei jeder Rotor (7; 8) einen Rotorhauptkörper (9; 10) aufweist, auf dem mindestens je ein Rotorflügel (11, 12) angeordnet ist, und die Rotorflügel der beiden Rotoren ineinandergreifen, **dadurch gekennzeichnet,**
**dass** bei mindestens einem der Rotoren (7; 8) in den Oberflächenabschnitten, in denen auf seinem Rotorhauptkörper (9; 10) keine Rotorflügel (11; 12) angeordnet sind, und die im Interaktionsbereich zu den Rotorflügel-Spitzen (18, 17) des zweiten Rotors (8, 7) liegen, der Rotorhauptkörper (9; 10) zumindest in Teilbereichen nicht zylindrisch und in seinem Querschnitt unrund ausgebildet ist, wobei nicht zylindrisch und unrund eine beliebige Hüllkurve der Rotorhauptkörper (9, 10) in den Interaktions-Oberflächenabschnitten bedeuten, in denen gezielt an bestimmten Stellen Vertiefungen in der Oberfläche der Rotorhauptkörper (9, 10) eingebracht oder Erhöhungen auf die Oberfläche der Rotorhauptkörper (9, 10) aufgebracht sind.

2. Innenmischer nach Anspruch 1,
**dadurch gekennzeichnet,**
**dass** in den Interaktions-Teilbereichen des Rotorhauptkörpers (9; 10) der Abstand der Rotorhauptkörper-Oberfläche zu seiner Rotorlängsachse (13; 14) zwischen mindestens zwei in ihrer axialen Position vorgebbaren senkrecht zur Rotorlängsachse (13; 14) gelegten Ebenen zumindest über ein Rotorhauptkörper-Umfangssegment verschieden ist.

3. Innenmischer nach Anspruch 2,
**dadurch gekennzeichnet,**
**dass** der unterschiedliche Abstand in radialer und/oder axialer Richtung vorsehbar ist.

4. Innenmischer nach Anspruch 2 oder 3,
**dadurch gekennzeichnet,**
**dass** sich die Abstände stetig ändern.

5. Innenmischer nach mindestens einem der Ansprüche 1 bis 4,
**dadurch gekennzeichnet,**
**dass** sich der Spalt (C) zwischen einem der Rotorhauptkörper (9; 10) und den Rotorflügel-Spitzen (17; 18) des zweiten Rotorhauptkörpers (10; 9) in Richtung der Rotorlängsachsen (13; 14) zu den Rotorenden hin verringert.

6. Innenmischer nach mindestens einem der Ansprüche 1 bis 4,
**dadurch gekennzeichnet,**
**dass** sich der Spalt (C) zwischen einem der Rotorhauptkörper (9; 10) und den Rotorflügel-Spitzen (17; 18) des zweiten Rotorhauptkörpers (10; 9) in Richtung der Rotorlängsachsen (13; 14) zu den Rotorenden hin vergrößert.

7. Innenmischer nach mindestens einem der Ansprüche 1 bis 6,
**dadurch gekennzeichnet,**
**dass** sich der Teilbereich über den gesamten Rotorhauptkörper (9; 10), auf dem keine Rotorflügel (11; 12) angeordnet sind, erstreckt.

8. Innenmischer nach mindestens einem der Ansprüche 1 bis 7,
**dadurch gekennzeichnet,**
**dass** der mindestens eine Rotor (7; 8) einen mittig angeordneten sich über mindestens die Hälfte der Rotorlänge erstreckenden schraubenlinienförmig auf dem Rotorhauptkörper (9; 10) angeordneten langen Rotorflügel (11; 12) sowie in den jeweiligen Endbereichen des Rotors (7; 8) angeordnete ebenfalls schraubenlinienförmig ausgebildete kürzere Rotorflügel (11', 11"; 12', 12") aufweist, dass die Steigung eines der Rotorflügel (11"; 12") gegenüber der Steigung der beiden anderen Rotorflügel (11, 11'; 12, 12') gegensinnig ist, und dass zwischen den freien Enden der Rotorflügel (11, 11', 11"; 12, 12', 12") Durchlässe für zu mischendes Material vorgesehen sind.

## Claims

1. An internal mixer (1) with a mixing chamber (3) that is enclosed by a housing (2), with a feeding shaft (4), in which a ram (5) is guided, with a closable emptying flap (6) and with a meshing rotor system consisting of a pair of rotors (7; 8), which respectively are rotatable about a longitudinal rotor axis (13; 14), wherein each rotor (7; 8) has a main rotor body (9; 10), on which at least one rotor blade (11, 12) is respectively arranged, and wherein the rotor blades of the two rotors meshing with one another,
**characterized in**
**that** the main rotor body (9; 10) of at least one of the rotors (7; 8) is at least in partial regions realized non-cylindrical and with a non-circular cross section in the surface sections, in which no rotor blades (11; 12) are arranged on its main rotor body (9; 10) and which lie in the interacting region with the rotor blade tips (18, 17) of the second rotor (8, 7), wherein non-cylindrical and non-circular mean an arbitrary envelope of the main rotor bodies (9, 10) in the interacting surface sections, in which depressions are purposefully produced in the surface of the main rotor body (9, 10) or elevations are purposefully applied onto the surface of the main rotor body (9, 10) at certain locations.

2. The internal mixer according to claim 1, **characterized in that** the distance of the main rotor body surface from its longitudinal rotor axis (13; 14) in the partial interacting regions of the roller main body (9; 10) differs between at least two planes, which extend perpendicular to the longitudinal rotor axis (13; 14) and can be predefined with respect to the axial position, over at least a circumferential segment of the main rotor body.

3. The internal mixer according to claim 2, **characterized in that** the different distance can be provided in the radial and/or the axial direction.

4. The internal mixer according to claim 2 or 3, **characterized in that** the distances change continuously.

5. The internal mixer according to at least one of claims 1 to 4, **characterized in that** the gap (C) between one of the main rotor bodies (9; 10) and the rotor blade tips (17; 18) of the second main rotor body (10; 9) decreases toward the rotor ends in the direction of the longitudinal rotor axes (13; 14).

6. The internal mixer according to at least one of claims 1 to 4, **characterized in that** the gap (C) between one of the main rotor bodies (9; 10) and the rotor blade tips (17; 18) of the second main rotor body (10; 9) increases toward the rotor ends in the direction of the longitudinal rotor axes (13; 14).

7. The internal mixer according to at least one of claims 1 to 6, **characterized in that** the partial region extends over the entire main rotor body (9; 10), on which no rotor blades (11; 12) are arranged.

8. The internal mixer according to at least one of claims 1 to 7, **characterized in that** the at least one rotor (7; 8) has a centrally arranged long rotor blade (11; 12), which extends over at least half the rotor length and is helically arranged on the main rotor body (9; 10), as well as shorter rotor blades (11', 11"; 12', 12"), which are arranged in the respective end regions of the rotor (7; 8) and likewise realized helically, **in that** the pitch of one of the rotor blades (11"; 12") is directed opposite to the pitch of the two other rotor blades (11, 11'; 12, 12'), and **in that** passages for material to be mixed are provided between the free ends of the rotor blades (11, 11', 11"; 12, 12', 12").

## Revendications

1. Malaxeur interne (1), pourvu d'une chambre de malaxage (3) entourée par un carter (2), avec un puits de chargement (4) dans lequel est guidé un plongeur (5), avec une trappe de vidange (6) pouvant se fermer, ainsi qu'avec un système de rotors qui s'engrènent, constitué d'une paire de rotors (7 ; 8) respectivement rotatifs autour d'un axe longitudinal (13 ; 14) de rotor, chaque rotor (7 ; 8) comportant un corps principal (9 ; 10) de rotor, sur lequel est placée chaque fois une pale (11, 12) de rotor, et les pales de rotor des deux rotors s'engrenant,
**caractérisé en ce que**
sur au moins l'un des rotors (7 ; 8), dans les segments superficiels dans lesquels sur son corps principal (9 ; 10) de rotor n'est placée aucune pale de rotor (11 ; 12), et qui se situent dans la zone d'interaction avec les pointes (18, 17) des pales de rotor du deuxième rotor (8, 7), au moins dans des zones partielles, le corps principal (9 ; 10) de rotor n'est pas conçu sous forme cylindrique et est conçu avec une section principale qui n'est pas ronde, non cylindrique et non rond signifiant une enveloppe quelconque des corps principaux (9, 10) de rotor dans les segments superficiels d'interaction, dans lesquels sur certains endroits, des creux sont ménagés de manière ciblée dans la surface du corps principal (9 ; 10) de rotor ou des élévations sont appliquées sur la surface du corps principal (9, 10) de rotor.

2. Malaxeur interne selon la revendication 1, **caractérisé en ce que** dans les zones partielles d'interaction du corps principal (9 ; 10) de rotor, l'écart entre la surface du corps principal de rotor et son axe longitudinal (13 ; 14) de rotor, entre au moins deux plans prédéfinissables dans leur position axiale, situés à la perpendiculaire de l'axe longitudinal (13 ; 14) de rotor est différent sur au moins un segment périphérique de corps principal de rotor.

3. Malaxeur interne selon la revendication 2, **caractérisé en ce que** l'écart différent peut être prévu dans la direction radiale et/ou axiale.

4. Malaxeur interne selon la revendication 2 ou 3, **caractérisé en ce que** les écarts varient constamment.

5. Malaxeur interne selon au moins l'une quelconque des revendications 1 à 4, **caractérisé en ce que** la fente (C) entre l'un des corps principaux (9 ; 10) de rotor et les pointes (17 ; 18) de pales de rotor du deuxième corps principal (10 ; 9) de rotor se réduit dans la direction des axes longitudinaux (13 ; 14) de rotor, vers les extrémités de rotor.

6. Malaxeur interne selon au moins l'une quelconque des revendications 1 à 4, **caractérisé en ce que** la fente (C) entre l'un des corps principaux (9 ; 10) de rotor et les pointes (17 ; 18) de pales de rotor du deuxième corps principal (10 ; 9) de rotor augmente dans la direction des axes longitudinaux (13 ; 14) de rotor, vers les extrémités de rotor.

7. Malaxeur interne selon au moins l'une quelconque des revendications 1 à 6, **caractérisé en ce que** la zone partielle s'étend sur l'ensemble du corps principal (9 ; 10) de rotor, sur lequel n'est placée aucune pale de rotor (11 ; 12).

8. Malaxeur interne selon au moins l'une quelconque des revendications 1 à 7, **caractérisé en ce que** l'au moins un rotor (7 ; 8) comporte une pale de rotor (11 ; 12), placée au centre, s'étendant sur au moins la moitié de la longueur du rotor, placée sous forme hélicoïdale sur le corps principal (9 ; 10) de rotor, ainsi que des pales de rotor (11', 11" ; 12', 12") plus courtes, placées dans les zones d'extrémité respectives du rotor (7 ; 8), également conçues sous forme hélicoïdale, **en ce que** la pente de l'une des pales de rotor (11" ; 12") est à contresens de la pente des deux autres pales de rotor (11, 11' ; 12, 12'), et **en ce qu'**entre les extrémités libres des pales de rotor (11, 11', 11" ; 12, 12', 12") sont prévus des passages pour la matière qui doit être malaxée.
